# EUROPEAN PATENT APPLICATION

(11) **EP 1 482 740 A1**
(43) Date of publication of application: **01.12.2004**
(21) Application number: 04006419.8
(22) Date of filing: 17.03.2004
(51) Int. Cl.: H04N 7/18

(54) **Image pickup apparatus, image pickup system, and image pickup method**

(30) Priority: 30.05.2003 JP 2003154251
(71) Applicant: Kabushiki Kaisha Toshiba, Tokyo (JP)
(72) Inventor: Yoshimura, Hiroshi, Tokyo 105-8001 (JP); Ambiru, Yasuhito, Tokyo 105-8001 (JP); Ooshima, Isao, Tokyo 105-8001 (JP)
(74) Representative: Henkel, Feiler & Hänzel

(57) **Abstract**

An image pickup apparatus including an image pickup section (11, 13) which picks up an image, a communication section (18, 19) which transmits the image to an external device, and which receives control information from the external device, and a processing section (20) which, in a state in which the image is displayed on a display screen of the external device, when a predetermined region on the display screen is designated, transmits regional information to the external device via the communication section in order to indicate the predetermined region within the image, and carries out masking processing for the image which is picked up at the image pickup section on the basis of the predetermined region, and setting of the masking processing is easily carried out on a screen of a PC 26 or the like, on a network.

## Description

The present invention relates to an image pickup apparatus such as a network camera or the like, and in particular, to an image pickup apparatus, an image pickup system, and an image pickup method which carry out setting of a mask region of a network camera.

Recently, accompanying the popularization of digital equipment, with respect to image information equipment such as digital cameras and the like as well, many types of equipment have been developed and manufactured. As such picture-information equipment as described above, for example, an image pickup apparatus such as a monitoring camera having a network function has been used.

As a prior art (Jpn. Pat. Appln. Publication KOKAI No. 9-102948) relating thereto, there is known a monitoring camera which is a video camera system such as a monitoring camera having a network function, and which recognizes a moving object in a monitoring area by being operated via a network.

However, in the above-described prior art, although the network function is shown, for example, a concrete method as to how masking processing and a region of the masking processing is to be set via a network is not described, and there is the problem that the user cannot easily set a desired region as a mask region.

An object of the present invention is to provide an image pickup apparatus, an image pickup system, and an image pickup method which can exactly put an object within a mask region by easily setting the mask region on a PC screen or the like.

In order to solve the above-described problems, the present invention provides an image pickup apparatus comprising: an image pickup section which picks up an image; a communication section which transmits the picked-up image to an external device, and which receives control information from the external device; and a processing section which, in a state in which the image is displayed on a display screen of the external device, when a predetermined region on the display screen is designated, transmits regional information to the external device via the communication section in order to indicate the predetermined region within the image, and carries out masking processing for the image which is picked up at the image pickup section on the basis of the predetermined region.

The image pickup apparatus according to the invention is an image pickup apparatus which displays a picked-up screen and can control the operations by a PC (Personal Computer) or the like via an Ethernet, a wireless LAN (Local Area Network), or the like, and the image pickup apparatus receives a coordinate signal of a predetermined region which is given from a pointing device such as a mouse or the like of the PC or the like, and generates a signal in order to display the region shown by the coordinate signal as a mask region within an image region which is being picked up by a camera. Accordingly, while monitoring, on the PC screen, the screen which is currently being picked up, the user can intuitively designate the region by the operation of enclosing, by the mouse or the like, the object in the screen on which the user especially wishes to carry out masking processing (for example, a region in the screen where the user wishes to protect his/her privacy, for example, individual information such as the name of the person, or the like), or the like. In accordance therewith, it is possible to reliably carry out the following masking processing.

Furthermore, for example, when driving functions in the panning direction and the tilting direction are provided to the image pickup apparatus according to the invention, the image pickup apparatus according to the invention can designate the mask region as a predetermined region within not only a region in the screen which is currently being picked up, but also the entire image pickup possible screen which can be picked up by moving the camera. The mask region is once designated and registered, even after the camera is automatically moved, the following masking processing in the mask region can be reliably carried out. For example, in the masking processing carried out by an automatic network monitoring camera or the like, the setting of a mask region within an important region in a room can be easily and reliably carried out.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an embodiment of a configuration of an image pickup apparatus according to the present invention.
FIG. 2 is an explanatory diagram showing an example of a method for connecting the image pickup apparatus according to the invention and a network.
FIG. 3 is a cross-sectional view showing the embodiment of the configuration of the image pickup apparatus according to the invention.
FIG. 4 is an explanatory diagram showing an example of the operations of a method for setting a mask region of masking processing for the image pickup apparatus according to the invention.
FIG. 5 is a flowchart showing an example of a method for setting a mask region of the image pickup apparatus according to the invention.
FIG. 6 is an explanatory diagram for explanation of the relationship between an image pickup possible screen AA and a mask region in the method for setting the mask region of the image pickup apparatus according to the invention.
Hereinafter, a network camera which is an image pickup apparatus according to the present invention will be described in detail with reference to the drawings.

### <Network Camera which is Image Pickup Apparatus according to the invention>

### (Configuration)

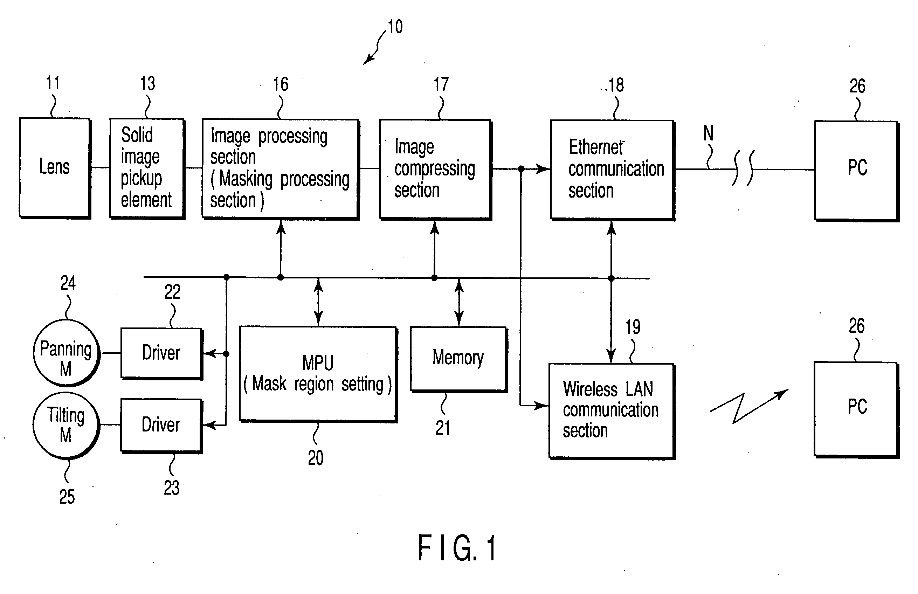

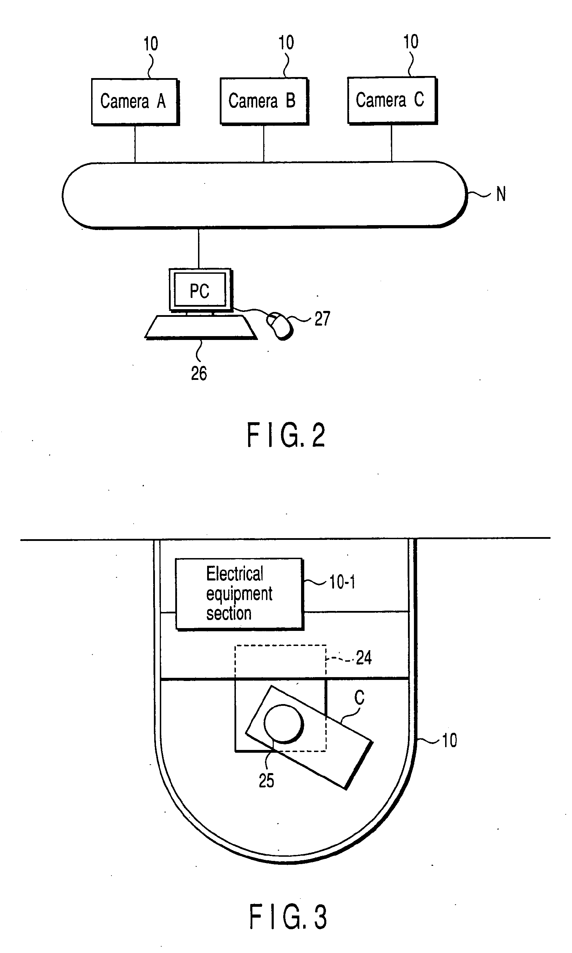

The image pickup apparatus and an image pickup system according to the invention will be described hereinafter by using the drawings, and by using the case of a PC (Personal Computer) connected to a network camera and a network as an example. FIG. 1 is a block diagram showing an embodiment of a configuration of the image pickup apparatus according to the invention, FIG. 2 is an explanatory diagram showing an example of a method for connecting the image pickup apparatus according to the invention and the network, and FIG. 3 is a cross-sectional view showing the embodiment of the configuration of the image pickup apparatus according to the invention.

As shown in FIG. 1, a network camera apparatus 10 which is the image pickup apparatus according to the invention has an objective lens 11 and a solid image pickup element 13 formed from a CCD (Charge Coupled Device) which receives incident light which passes through the objective lens 11 and which outputs a detection signal corresponding to the incident light, or the like. Moreover, the image pickup apparatus 10 has an image processing section 16 receiving the output from the solid image pickup element 13, and an image compressing section 17 carrying out compression processings such as MPEG compression, JPEG compression, or the like, with respect to an image signal processed at the image processing section 16. At the image processing section 16, image processings such as, for example, sharpness processing, contrast processing, gamma correction, white balance processing, pixel addition processing, or the like, are carried out on the inputted image signal.

Moreover, the network camera apparatus 10 has an MPU (Main Processing Unit) 20 which controls the entire processing operations, and which controls masking processing and setting of a mask region which are the features of the invention and which will be described later, and a memory 21 which stores a program managing these operations, and which provides a work area for carrying out the respective processing operations with respect to the image signal, and in which image data for alarm indication, or the like is stored.

Further, the network camera apparatus 10 has an Ethernet communication section 18 and a wireless LAN (Local Area Network) communication section 19 which are connected to the MPU 20 via a data bus, and carries out communication processing with, for example, an external PC 26 via a wire network N or a wireless network.

Moreover, the network camera apparatus 10 has a panning driver 22 for driving a camera unit C in the panning direction and a panning motor 24 such as a stepping motor or the like, and a tilting driver 23 for driving the camera unit C in the tilting direction and a tilting motor 25 such as a stepping motor or the like, which are connected to the MPU 20 via the data bus and are controlled by the MPU 20. Here, the camera unit C has at least the objective lens 11 and the solid image pickup element 13 described above.

Further, as shown in FIG. 2, a plurality of the network camera apparatuses 10 can be provided via the network N. Moreover, driving processings, in the panning direction and the tilting direction, of the network camera apparatus 10 are possible by the PC 26 or the like via the network N, and furthermore, monitoring and recording/playback processing of the image signal picked up by the network camera apparatus 10 are possible. Further, a pointing device such as a mouse 27 or the like is connected to the PC 26, and in particular, setting of the mask region which will be described later can be easily carried out.

Moreover, as shown in FIG. 3, the network camera apparatus 10 has the camera unit C, the panning motor 24 for driving the camera unit C in the panning direction, and the tilting motor 25 for driving the camera unit C in the tilting direction, and further has an electrical equipment section 10-1 having a configuration other than those shown in FIG. 1. (Basic Operations)

The network camera apparatus 10 having such a configuration carries out basic operations as will be described hereinafter. Namely, the network camera apparatus 10 can carry out an image pickup operation in which incident light from the object is received and an image signal corresponding to the picked-up screen is supplied via a network or the like, and a camera driving operation in which the direction of the camera unit C is driven, for example, in the panning direction and the tilting direction, and further, the respective operation modes (for example, masking processing) based on the picked-up image signal, various types of setting operations such as setting of a mask region which will be described later and the like, the self-testing operation, or the like.

Namely, the image pickup operation is carried out by the control of the MPU 20 by receiving an instruction signal from the PC 26 which is a control device, or the like, via the network N (or the wireless network) in accordance with an operation program stored in the memory 21. The solid image pickup element 13 having received the incident light from the object via the objective lens 11 supplies a detection signal corresponding to the incident light to the image processing section 16, and applies the predetermined image processing thereto. Thereafter, image compression such as JPEG compression, MPEG compression, or the like is carried out at the image compressing section 18, and the compressed image is outputted to the exterior via the Ethernet communication section 18 or the wireless LAN communication section 19.

Further, in the camera driving operation, after zero coordinate adjustment is carried out at the panning motor 24 and the tilting motor 25 which are the stepping motors, the MPU 20 always recognizes the current direction of the camera unit C. In accordance therewith, the MPU 20 always manages the coordinate of the screen which the camera unit C is currently picking up, and at the same time when the picked-up screen is changed by driving the camera unit C in the panning direction or the tilting direction in accordance with an operation control signal supplied to a driver from the MPU 20, the MPU 20 always recognizes the coordinate of the current picked-up screen. Accordingly, while watching, from the screen of the PC 26 or the like connected via the network, the picked-up screen which corresponds to the image signal which the image pickup apparatus 10 is currently continuing to supply, the user can move the camera unit C in the panning direction or the tilting direction, and can watch a picked-up screen which corresponds to the movement. Further, the MPU 20 recognizes and manages the coordinates of the current picked-up screen, and the user can acquire the coordinate information of the current picked-up screen, for example, on the PC 26.

Further, in the respective operation modes, for example, in the masking processing mode, predetermined masking processing is carried out on an image within an arbitrary region set by the user. Namely, when a mask region in the picked-up screen is set on the setting screen of the mask region in accordance with the operation by the user, thereafter, during a set period, masking processing by a method such as, for example, carrying out mosaic processing, painting-out with a black image, replacing with another image, or the like, are carried out on the mask region in the picked-up screen.

### (Setting Operation of Mask Region)

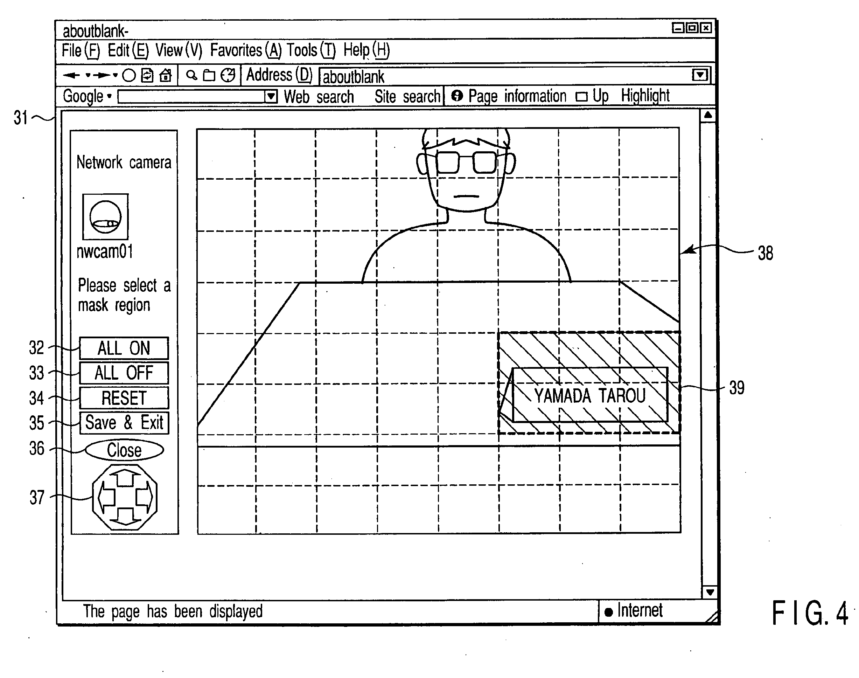

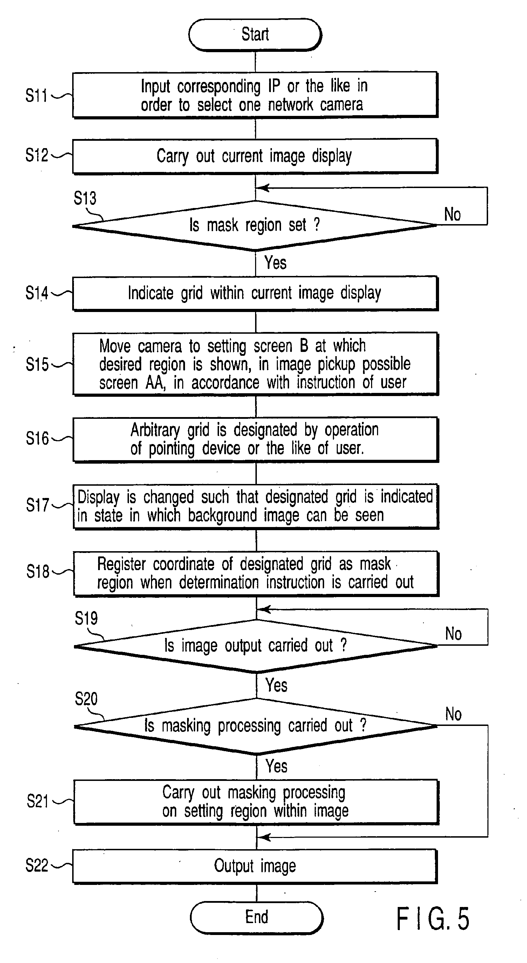

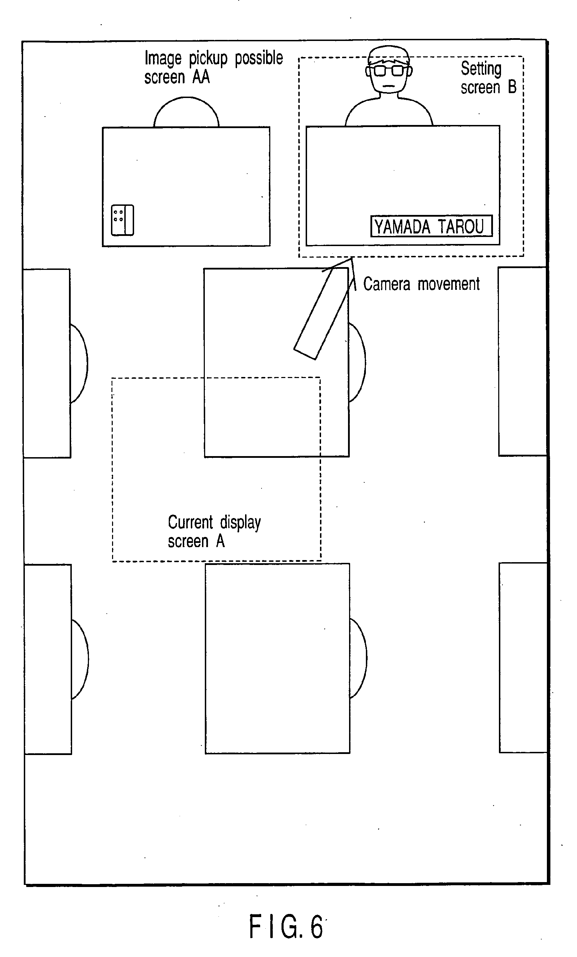

The setting operation of the mask region according to the invention in the image pickup apparatus 10 according to the invention carrying out such basic operations will be described in detail hereinafter with reference to a flowchart. FIG. 4 is an explanatory diagram showing an example of the operations of a method for setting the mask region of the masking processing for the image pickup apparatus according to the invention, FIG. 5 is a flowchart showing an example of the method for setting the mask region of the image pickup apparatus according to the invention, and FIG. 6 is an explanatory diagram for explanation of the relationship between an image pickup possible screen AA and the mask region in the method for setting the mask region of the image pickup apparatus according to the invention.

With respect to the setting of the mask region of the image pickup apparatus 10 according to the invention, at least two cases of a case in which a mask region is set within the current display screen A which is being currently displayed, and a case in which, as shown in FIG. 6, in the image pickup possible screen AA of a range which can be picked up within the range of the driving function of the image pickup apparatus 10, the screen is moved from the current display screen A to a desired screen B due to the camera unit C being moved from the panning direction to the tilting direction by the operation of the user, and an arbitrary region in the desired screen B is set as a mask region 39, are possible.

Here, as one example of the setting operation of the mask region according to the invention, the case in which the screen is moved from the current display screen A to the desired screen B due to the.camera unit C being moved from the panning direction to the tilting direction by the operation of the user within the image pickup possible screen AA, and an arbitrary region in the desired screen B is set as the mask region 39, will be described hereinafter with reference to the flowchart of FIG. 5.

First, an IP address signal designated from a control device such as the PC 26 or the like on the network is supplied to the image pickup apparatus 10 according to the invention, and when it is determined that the Ethernet communication section 18 or the wireless LAN communication section 19 of the image pickup apparatus 10 corresponds to the IP address, one image pickup apparatus 10 is operated under the control of the PC26 or the like (S11). Here, when the image pickup apparatus 10 receives an instruction of the image pickup operation from the PC 26, an image pickup operation is carried out under the control of the MPU 20, and a detection signal corresponding to the incident light is supplied to the image processing section 16 from the solid image pickup element 13. At the image processing section 16, for example, sharpness processing, contrast processing, gamma correction, white balance processing, pixel addition processing, and further, masking processing by mosaic processing, image replacing processing, or the like, are carried out on the inputted image signal.

Thereafter, JPEG compression or MPEG compression is applied thereto at the image compressing section 17, and the image signal is outputted via one of the Ethernet communication section 18 or the wireless LAN communication section 19. The outputted image signal is displayed as, for example, a screen of a browser application 31 shown in FIG. 4 after expansion processing is applied thereto, for example, at the PC 26 (S12) .

Here, when a mode of setting the mask region is selected by the user (S13), at the screen of the browser application 31 as shown in FIG. 4, a current picked-up screen 37 is displayed along with operation icons 32 through 37 at the operating region. At that time, as an example, the screen is preferably displayed so as to be divided into a plurality of blocks (a grid) (S14). Namely, the unit of the region at which a mask region can be set is concretely displayed, whereby the user can reliably carry out the setting of the region on the object.

Here, the operation icons are icons for the mask region setting mode, and an 'ALL ON' icon 32 is an icon for making the entire screen be the mask region, an 'ALL OFF' icon 33 is an icon for canceling the mask region on the entire screen, a 'RESET' icon 34 is an icon for canceling the mask region designated by a pointing device such as a mouse or the like, and for returning to the default value, a 'Save & Exit' icon 35 is an icon for determining the mask region designated by the pointing device such as a mouse or the like, and for completing the mask region setting mode, a 'Close' icon 36 is an icon for closing the screen, and an arrow icon 37 is an icon for moving the camera unit C in the panning direction or the tilting direction.

As shown by FIG. 6, the mask region according to the invention is not only set in the current display screen A, but also can be set to a desired region provided that the desired region is within the image pickup possible screen AA which can be picked up by driving the camera unit C in the panning direction or the tilting direction. Accordingly, the user moves the camera from the current display screen A to the desired screen B, which are shown in FIG. 6, by operating the arrow icon 37 or the like (S15). Further, arbitrary blocks (a grid) can be designated as the mask region 39 by the operation of the pointing device such as the mouse 27 or the like of the user (S16). When the MPU 20 receives the coordinate information and the instruction signal from the PC 26 or the like via the network, as shown in FIG. 4, the MPU 20 carries out an active display by translucent rectangular blocks or the like such that the region serves as the mask region 39 in a state in which the background image can be seen (S17).

In accordance therewith, for example, as shown in FIG. 4 and FIG. 6, masking processing can be carried out on the region by the operation of enclosing, by the mouse or the like, for example, a region where the user wishes to protect his/her privacy, i.e., for example, individual information such as the name of the person or the like.

Note that, here, when the user determines that there are problems in this region, and supplies an instruction signal to the MPU 20 via the network by an operation of the mouse or the like, the active display is cancelled, and the region returns to a normal image pickup display which is the same as the other region. In accordance therewith, extremely intuitive designation of a region by the user is possible.

Finally, in order to determine the region which is currently being active-indicated as the mask region 39, the user operates, for example, the 'Save & Exit' icon 35, and the determination signal is supplied as the instruction signal to the MPU 20 via the network. When the determination instruction is carried out, the coordinate of the designated blocks (a grid) is registered as a new mask region, for example, in the memory 21 or the like (S18).

In accordance therewith, on the setting screen of FIG. 4, the image within the mask region 39 as well is displayed, and it is possible for the user to reliably set an object, which the user wishes to be the object of the masking processing, to be within the mask region by an extremely easy and intuitive operation.

Thereafter, when the MPU 20 of the image pickup apparatus 10 receives the instruction of the user (S20) via the network in order to carry out the image output (S19) and the masking processing, the above-described registered coordinate information of the mask region is read from the memory 21 or the like, and masking processing, such as mosaic processing, painting-out processing, or the like, in which the image is replaced with another image in order to not distinguish the region, is carried out on the setting region in the image (S21).

At that time, it is preferable not only to uniformly mask-process the entire image, but also to transmit an image signal on which masking processing has been carried out, the image signal as is, or an image signal on which masking processing by a designated method (for example, mosaic processing or the like) has been carried out, to an arbitrary transmission destination in accordance with a setting. In accordance therewith, for example, it is possible to appropriately use transmitting an image on which masking processing has not been carried out, to a recorder for storing, and transmitting an image from which individual information to be protected by applying masking processing thereto is eliminated, to the external users.

In accordance with the various embodiments described above, the skilled in the art can realize the invention. However, it is easy for those skilled in the art to further conceive of various modified examples of these embodiments, and the invention can be applied to various embodiments without inventive ability. Accordingly, the invention extends over a broad range which does not contradict the disclosed principles and the novel features, and is not limited to the embodiments described above.

For example, the PC 26 described as the control device on the network is merely one example, and the PC 26 can be a recorder for the digital images having the similar functions, and in the same way, in accordance therewith, it is possible not only to carry out the image pickup operation, but also to record and playback an picked-up image.

As described above, in accordance with the invention, in a control device such as a PC or the like by a network or the like, an image pickup apparatus, an image pickup system, and an image pickup method which can reliably include the object within the mask region by easily designating an object in a picked-up screen by using a pointing device such as a mouse or the like, at the time of setting a mask region of a masking processing, can be provided.

## Claims

1. An image pickup apparatus **characterized by** comprising:
an image pickup section (11, 13) which picks up an image;
a communication section (18, 19) which transmits the picked-up image to an external device, and which receives control information from the external device; and
a processing section (20) which, in a state in which the image is displayed on a display screen of the external device, when a predetermined region on the display screen is designated, transmits regional information to the external device via the communication section in order to indicate the predetermined region within the image, and carries out masking processing for the image which is picked up at the image pickup section on the basis of the predetermined region.

2. The image pickup apparatus according to claim 1, **characterized in that** the processing section transmits regional information to the external device via the communication section in order to indicate the predetermined region within the image, and after a determination signal is received from the communication section in accordance therewith, the processing section carries out masking processing for the image which is picked up at the image pickup section on the basis of the predetermined region.

3. The image pickup apparatus according to claim 1, **characterized in that**, in a state in which the image is displayed as a plurality of block regions on the display screen of the external device, when a predetermined region on the display screen is designated, the processing section transmits regional information to the external device via the communication section in order to indicate the predetermined region within the image so as to be in a state of being able to be distinguished from the other region.

4. The image pickup apparatus according to claim 1, **characterized in that**, in a state in which the image is displayed as a plurality of block regions on the display screen of the external device, when a predetermined region on the display screen is designated along with an instruction signal, the processing section indicates the predetermined region within the image so as to be in a state of being able to be distinguished from the other region, and when the predetermined region is designated along with the instruction signal again, the processing section transmits image information generated in order to cancel the distinguishable indication, to the external device via the communication section.

5. The image pickup apparatus according to claim 1, **characterized in that**, when the predetermined region on the display screen is designated, the processing section outputs regional information generated in order to display the image in the predetermined region within the image in a state in which the user can distinguish in the same way as the image at the other region, via the communication section.

6. The image pickup apparatus according to claim 1, **characterized in that**, at the processing section, the predetermined region is designated by a pointing device connected to the external device via the communication section.

7. The image pickup apparatus according to claim 1, **characterized by** further comprising:
an image compressing section which compresses the picked-up image in order to display the image by a browser application at the external device via the communication section.

8. The image pickup apparatus according to claim 1, **characterized by** further comprising:
at least one of a driving section which drives the image pickup section in the panning direction and a driving section which drives the image pickup section in the tilting direction.

9. The image pickup apparatus according to claim 8, **characterized in that** the processing section can set the predetermined region within the range of the image pickup possible screen which can be picked up by a movement of the image pickup section by the driving section, and carries out masking processing for an image which is picked up at the image pickup section on the basis of the predetermined region.

10. The image pickup apparatus according to claim 1, **characterized in that** the processing section carries out the masking processing by mosaic processing on the predetermined region of the picked-up image.

11. The image pickup apparatus according to claim 1, **characterized in that** the processing section carries out the masking processing by painting-out processing on the predetermined region of the picked-up image.

12. The image pickup apparatus according to claim 1, **characterized in that** the processing section outputs an image on which the masking processing based on the predetermined region has been carried out, and an image on which the masking processing has not been carried out.

13. The image pickup system having an image pickup apparatus and a control device which are connected to one another via a network, and a communication section which carries out communication between the both, the system **characterized by** comprising:
an image pickup apparatus having an image pickup section which picks up an image, and a processing section which, in a state in which the image is displayed on a display screen of the control device, when a predetermined region on the display screen is designated, transmits regional information to the control device via the communication section in order to indicate the predetermined region within the image, and carries out masking processing for the image which is picked up at the image pickup section on the basis of the predetermined region; and
the control device which receives the image from the image pickup apparatus via the communication section and displays the image, and which supplies the predetermined region to the image pickup apparatus in accordance with an instruction of a user,

14. The image pickup system according to claim 13, **characterized in that** the processing section of the image pickup apparatus displays the image as a plurality of block regions, and when the predetermined region is designated, the processing section outputs regional information generated in order to indicate the predetermined region so as to be in a state of being able to be distinguished from the other region, to the control device via the communication section.

15. The image pickup system according to claim 13, **characterized in that** the processing section of the image pickup apparatus displays the image as a plurality of block regions, and when the predetermined region is designated along with an instruction signal, the processing section indicates the predetermined region so as to be in a state of being able to be distinguished from the other region, and when the predetermined region is designated along with the instruction signal again, the processing section outputs the regional information generated in order to cancel the distinguishable indication, to the control device via the communication section.

16. The image pickup system according to claim 13,
**characterized in that**, in a state in which the image is displayed on the display screen of the control device, when a predetermined region on the display screen is designated, the processing section of the image pickup apparatus transmits the regional information generated in order to display the image within the predetermined region so as to be in a state in which the user can distinguish in the same way as the other image, to the control device via the communication section.

17. An image pickup method **characterized by** comprising:
picking up an image; and
in a state in which the image is displayed on a display screen of an external device via a network, when a predetermined region on the display screen is designated, transmitting regional information generated in order to indicate the predetermined region within the image, to the external device via the network, and carrying out masking processing for the picked-up image on the basis of the predetermined region.

18. The image pickup method according to claim 17, **characterized in that** the image is displayed as a plurality of block regions, and when the predetermined region is provided, the regional information generated in order to indicate the predetermined region so as to be in a state of being able to be distinguished from the other region is outputted via the network.

19. The image pickup method according to claim 17, **characterized in that** the image is displayed as a plurality of block regions, and when the predetermined region is provided along with an instruction signal, the predetermined region is indicated so as to be in a state of being able to be distinguished from the other region, and when the predetermined region is provided along with the instruction signal again, the regional information generated in order to cancel the distinguishable indication is outputted via the network.

20. The image pickup method according to claim 17, **characterized in that**, when the predetermined region is designated, the regional information generated in order to display the image within the predetermined region so as to be in a state in which the user can distinguish in the same way as the other image is outputted via the network.
